# EUROPÄISCHE PATENTANMELDUNG

(11) **EP 1 234 721 A2**
(43) Veröffentlichungstag der Anmeldung: **28.08.2002**
(21) Anmeldenummer: 02002504.5
(22) Anmeldetag: 02.02.2002
(51) Int. Cl.: B60Q 3/02, B60J 7/00

(54) **Fahrzeugdach mit flächigem Beleuchtungselement**

(30) Priorität: 21.02.2001 DE 10108302
(71) Anmelder: Webasto Vehicle Systems International GmbH, 82131 Stockdorf (DE)
(72) Erfinder: Nolles, Rinse Dennis, 81243 München (DE); Wobido, Thomas, 81245 München (DE); Kölbl, Michael, 82061 Neuried (DE)
(74) Vertreter: Wiese, Gerhard

(57) **Zusammenfassung**

Die Erfindung betrifft ein Fahrzeugdach, das mit einem verstellbaren Schließelement (10, 110) zum wahlweisen Verschließen bzw. mindestens teilweisen Freigeben einer Öffnung (12) in einer festen Dachhaut (14) versehen ist, wobei das Schließelement an der Unterseite mit einem flächigen Beleuchtungselement (26, 38, 64, 66) versehen ist. Das flächige Beleuchtungselement (26, 38, 64, 66) ist als direkt auf das Schließelement (10, 110) aufgebrachte Schicht ausgebildet.

## Beschreibung

Die vorliegende Erfindung betrifft ein Fahrzeugdach gemäß dem Oberbegriff von Anspruch 1.

Ein solches gattungsgemäßes Fahrzeugdach ist aus der DE 299 08 994 U1 bekannt, wobei vorgeschlagen wird, an der Unterseite von Fahrzeugschiebedächern eine Elektrolumineszenzfolie anzukleben, welche eine erste Schutzschicht, eine erste Elektrode, eine Schicht aus elektrolumineszierenden Material, eine zweite Elektrode sowie eine zweite Schutzschicht aufweist, wobei eine der Schutzschichten auf ihrer Rückseite selbstklebend ausgebildet ist.

Es ist Aufgabe der vorliegenden Erfindung, ein Fahrzeugdach zu schaffen, bei welchem auf einfache und zweckmäßige Weise ohne wesentliche Vergrößerung des Bauraums für eine Beleuchtungsmöglichkeit gesorgt wird.

Diese Aufgabe wird erfindungsgemäß gelöst durch ein Fahrzeugdach gemäß Anspruch 1.

Dabei ist vorteilhaft, dass durch das Aufbringen des Beleuchtungselements als Schicht direkt auf das Schließelement die Herstellung vereinfacht werden kann.

Bevorzugte Ausgestaltungen der Erfindung sind in den Unteransprüchen angegeben.

Im folgenden wird die Erfindung anhand der beigefügten Zeichnungen beispielhaft näher erläutert. Dabei zeigen:
- Fig. 1: eine schematische Seitenansicht eines erfindungsgemäßen Fahrzeugdaches;
- Fig. 2: schematisch den Schichtaufbau eines erfindungsgemäßen Beleuchtungselements; und
- Fig. 3: eine Aufsicht auf einen erfindungsgemäßen Deckel eines Fahrzeugdaches.

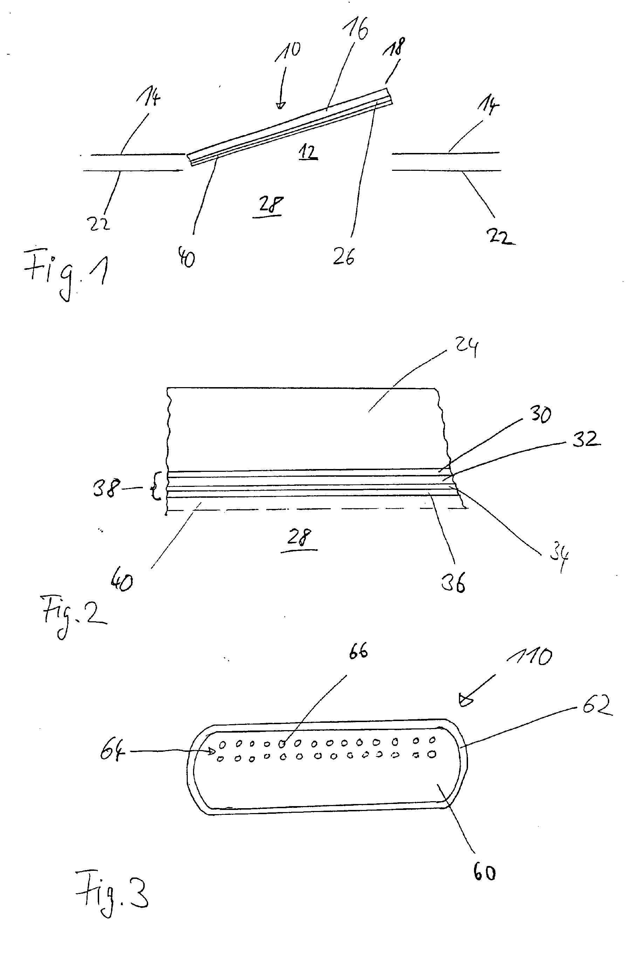

Gemäß Fig. 1 ist in einer festen Dachhaut 14 eine Dachöffnung 12 ausgebildet, welche von einem Deckel 10 wahlweise verschlossen oder mindestens zum Teil freigegeben werden kann. Der Deckel 10 ist dabei in an sich bekannter Weise von einem Antrieb angetrieben und kann in verschiedene Stellungen gebracht werden. In der in Fig. 1 gezeigten Lüftungsstellung ist der Deckel 10 mit seiner Hinterkante 18 über den hinteren Rand der Dachöffnung 12 verschwenkt. Unterhalb der festen Dachhaut 14 ist ein Festhimmel 22 vorgesehen, welcher im Bereich der Dachöffnung 12 unterbrochen ist.

Der Deckel 10 umfasst eine Deckelplatte 16, welche an ihrer Unterseite mindestens in einem Teilbereich mit einem flächigen Elektrolumineszenzelement 26 versehen ist, welches als Schicht direkt auf die Unterseite der Deckelplatte 16 aufgebracht sein kann. Auf das Elektrolumineszenzelement 26 kann ein Kaschierstoff 40 folgen, welcher im Aussehen dem Festhimmel 22 entspricht. Statt auf die Unterseite der Deckelplatte 16 kann das Elektrolumineszenzelement 26 auch auf die Rückseite des Kaschierstoffes 40 direkt als Schicht aufgebracht sein, beispielsweise durch Aufdrucken.

Ein Beispiel für den Schichtaufbau des Elektrolumineszenzelements 26 ist in Fig. 2 dargestellt.

Dabei wird auf die Unterseite der Deckelplatte 16 eine erste flächige Elektrode 30 aufgebracht, an welche sich eine Schicht aus elektrolumineszenzfähigem Material 32 anschließt, auf welche wiederum eine zweite Elektrode 34 folgt. Auf die zweite Elektrode 34 kann eine Schutzschicht 36 folgen, um das Elektrolumineszenzelement vor Beschädigungen zu schützen. Die genannten Schichten können mittels bekannter Beschichtungsverfahren auf die Unterseite der Deckelplatte 16 aufgebracht werden und sind insgesamt mit dem Bezugszeichen 38 bezeichnet. Das Elektrolumineszenzelement 38 kann bezüglich des Fahrzeuginnenraums durch einen Kaschierstoff 40 (in Fig. 2 gestrichelt angedeutet) bezüglich des Fahrzeuginnenraums 28 verdeckt sein, wobei der Kaschierstoff 40 mindestens zum Teil lichtdurchlässig ist, um die Möglichkeit einer Beleuchtung durch das Elektrolumineszenzelement 38 zu ermöglichen, ohne dass dieses aus dem Fahrzeuginnenraum 28 sichtbar ist. Grundsätzlich ist es auch möglich, dass das Elektrolumineszenzelement 38 statt auf die Unterseite der Deckelplatte 16 auf die Rückseite des Kaschierstoffes 40 aufgebracht wird.

Durch Anlegen einer Spannung zwischen den beiden Elektroden 30 und 34, was über geeignete Zuleitungen erfolgt, kann das Lumineszenzmaterial 32 zu einer Lichtemission angeregt werden, wobei durch Verändern der Spannung die Helligkeit eingestellt werden kann und durch Verändern der Frequenz, wenn eine Wechselspannung angelegt wird, die Farbtemperatur des ausgesandten Lichts verändert werden kann. Zu diesem Zweck sind entsprechende nicht gezeigte Bedienelemente vorgesehen, die es dem Fahrzeugbenutzer erlauben, Helligkeit und gegebenenfalls Farbe des von dem Lumineszenzelement 38 emittierten Lichts einzustellen.

Auf diese Weise kann insbesondere bei Nacht oder in Tunneln bei geschlossenem Deckel 10 für eine angenehme Innenraumbeleuchtung gesorgt werden.

Bei der Ausführungsform gemäß Fig. 1 ist die Deckelplatte 16 aus nicht transparentem Material ausgebildet, z.B. als Blechdeckel oder als Solardeckel. Durch das Vorsehen des Kaschierstoffes 40 kann auf einen zusätzlichen verschiebbaren Himmel unterhalb der Dachöffnung 12 verzichtet werden. Selbst wenn auf einen Kaschierstoff 40 verzichtet wird, kann dennoch auf einen Schiebehimmel verzichtet werden, wenn das Elektrolumineszenzelement 26 in einem Farbton passend zum Festhimmel 22 ausgebildet ist, z.B. durch entsprechende Materialwahl. Durch den Wegfall des Schiebehimmels können sowohl Kosteneinsparungen als auch Einsparungen beim benötigten Bauraum für das Dachsystem erzielt werden.

Alternativ kann der Deckel 10 mindestens in bestimmten Bereichen transparent ausgebildet sein. In diesem Fall ist es zweckmäßig, in üblicher Weise unterhalb der Dachöffnung 12 einen Schiebehimmel vorzusehen, um unerwünschten Lichteinfall durch den Deckel 10 hindurch zu verhindern.

Ein Beispiel für einen transparenten Deckel ist schematisch in Fig. 3 gezeigt. Der Deckel 110 umfasst eine transparente Kunststoff- oder Glasscheibe 60, welcher im Randbereich 62 mit einer nicht-transparenten Umschäumung versehen ist, um die Scheibe mit mechanischen Elementen, wie beispielsweise Führungselementen oder Verstärkungselementen, zu verbinden.

In dem Randbereich 62 ist an der Deckelunterseite ein Elektrolumineszenzelement vorgesehen, das grundsätzlich wie bei der Ausführungsform gemäß Fig. 1 und 2 ausgebildet sein kann. Zusätzlich kann im transparenten Bereich der Scheibe 60 ein Muster 64 vorgesehen sein, welches im gezeigten Beispiel aus rasterartig angelegten Punkten 66 besteht. Die Rasterpunkte 66 sind jeweils als Elektrolumineszenzelemente ausgebildet, wobei ihre Elektroden in geeigneter Weise mittels Leiterbahnen leitend verbunden sind. Die Rasterpunkte 66 werden beispielsweise als Druckmuster direkt auf die Unterseite der Deckelscheibe aufgebracht, um ein teiltransparentes flächiges Beleuchtungselement zu bilden.

## Patentansprüche

1. Fahrzeugdach mit einem verstellbaren Schließelement (10, 110) zum wahlweisen Verschließen bzw. mindestens teilweisen Freigeben einer Öffnung (12) in einer festen Dachhaut (14), wobei das Schließelement an der Unterseite mit einem flächigen Beleuchtungselement (26, 38, 64, 66) versehen ist, **dadurch gekennzeichnet, dass** das flächige Beleuchtungselement (26, 38, 64, 66) als direkt auf das Schließelement (10, 110) aufgebrachte Schicht ausgebildet ist.

2. Fahrzeugdach gemäß Anspruch 1, **dadurch gekennzeichnet, dass** das Schließelement als Deckel (10, 110) eines Schiebedaches, Schiebe-Hebe-Daches oder Spoilerdaches ausgebildet ist.

3. Fahrzeugdach gemäß Anspruch 2, **dadurch gekennzeichnet, dass** der Deckel (110) als von einem nichttransparenten Rahmen (62) getragene transparente Scheibe (60) ausgebildet ist.

4. Fahrzeugdach gemäß Anspruch 3, **dadurch gekennzeichnet, dass** das flächige Beleuchtungselement im nichttransparenten Rahmenbereich (62) vorgesehen ist.

5. Fahrzeugdach gemäß Anspruch 3 oder 4, **dadurch gekennzeichnet, dass** das flächige Beleuchtungselement als Muster (64) über den transparenten Bereich der Scheibe (62) verteilt ist.

6. Fahrzeugdach gemäß Anspruch 5, **dadurch gekennzeichnet, dass** das Muster (64) als Punktraster (66) ausgebildet ist.

7. Fahrzeugdach gemäß Anspruch 2, **dadurch gekennzeichnet, dass** der Deckel (10) nichttransparent ausgebildet ist und an seiner Unterseite mit einem Kaschierstoff (40) versehen ist.

8. Fahrzeugdach gemäß Anspruch 7, **dadurch gekennzeichnet, dass** das flächige Beleuchtungselement (26) auf die dem Deckel (10) zugewandte Seite des Kaschierstoffs (40) aufgebracht ist.
